## Europäisches Patentamt

## European Patent Office

## Office européen des brevets

(19)

(11) Veröffentlichungsnummer: **0 140 826**
**B1**

(12) **EUROPÄISCHE PATENTSCHRIFT**

(45) Veröffentlichungstag der Patentschrift:
**19.04.89**

(21) Anmeldenummer: **84730112.4**

(22) Anmeldetag: **17.10.84**

(51) Int. Cl.⁴: **C 04 B 28/04** //
(C04B28/04, 14:26, 22:06,
24:36)

(54) Verwendung einer Betonmischung bzw. Zementmörtelmischung zur Herstellung von Abwasser-Bauwerken und Verfahren zur Herstellung einer solchen Mischung.

<table>
<tr><td>(30) Priorität: <b>18.10.83 LU 85049</b></td><td>(73) Patentinhaber: <b>Ludwig Voss GmbH & Co. KG,<br>Grodener Chaussee 55, D-2190 Cuxhaven (DE)</b></td></tr>
<tr><td>(43) Veröffentlichungstag der Anmeldung:<br><b>08.05.85 Patentblatt 85/19</b></td><td>(72) Erfinder: <b>Voss, Johann, Dipl.- Ing., Häfchenweg 9,<br>D-2190 Cuxhaven- Duhnen (DE)</b></td></tr>
<tr><td>(45) Bekanntmachung des Hinweises auf die Patenterteilung:<br><b>19.04.89 Patentblatt 89/16</b></td><td>(74) Vertreter: <b>Eikenberg & Brümmerstedt<br>Patentanwälte, Schackstrasse 1, D-3000 Hannover<br>1 (DE)</b></td></tr>
<tr><td>(84) Benannte Vertragsstaaten:<br><b>AT BE CH DE FR GB LI NL</b></td><td></td></tr>
<tr><td>(56) Entgegenhaltungen:<br><b>DE-A-2 951 198<br>DE-C-100 145<br>FR-A-1 291 011<br>US-A-1 678 346<br><br>F.M. LEA: "The chemistry of cement and<br>concrete", 3. Ausgabe, Seiten 638-645, Edward<br>Arnold (Publishers) Ltd.;<br>CHEMICAL ABSTRACTS, Band 80, Nr. 18, 6. Mai<br>1974, Seite 238, Nr. 99566a, Columbus, Ohio, US; Z.<br>PEJCHOTA: "Effects of hydrogen sulfide on the<br>concrete walls of main sewers" & VOD. HOSPOD.<br>B 1973, 23(11), 291-294</b></td><td></td></tr>
</table>

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

## Beschreibung

Abwasser-Bauwerke aus Beton oder aus einem mit Zementmörtel gemauerten Mauerwerk weisen häufig schon nach wenigen Jahren schwere Schäden auf, die auf einen bakterieninduzierten Scßwefelsäureangriff zurückzuführen sind. Die von den Abwässern ausgehenden Faulgase besitzen nämlich in der Regel einen verhältnismäßig hohen Gehalt an Schwefelverbindungen, welche durch bestimmte, als "Thiobazillen" oder "Thiooxybazillen" bezeichnete Bakterien zu Schwefelsäure oxidiert werden. Diese Bakterien siedeln sich oberhalb des Abwasserspiegels an den Oberflächen der Bauwerke an bzw. dringen in Fugen und Ritzen ein, und die von ihnen produzierte Schwefelsäure zerstört dann den Beton oder Mörtel.

Man hat versucht, die durch den bakterieninduzierten Schwefelsäureangriff gefährdeten Bauwerke durch dichtes Versiegeln, Beschichten oder Auskleiden der Oberflächen beispielsweise mit säurebeständigen Kunststoffen zu vermeiden, jedoch ist dies problematisch geblieben. Die Bakterien können sich nämlich auch auf solchen Kunststoffoberflächen ansiedeln und von dort aus die Versiegelungen, Beschichtungen oder Auskleidungen durch Schadstellen, Fugen, Poren und Risse hindurch hinterwandern. Es ist in der Praxis nicht möglich, Versiegelungen, Beschichtungen oder Auskleidungen auf Dauer völlig dicht zu halten, den selbst bei guter konstruktiver Ausführung können sie bei entstehenden Zwängungsspannungen reißen oder auf andere Weise bauphysikalisch Schaden nehmen und undicht werden. Sie sind dann eher schädlich als nützlich. Außerdem sind Versiegelungen, Beschichtungen oder Auskleidungen mit Kunststoffen o. dgl. sehr kostspielig.

Hier setzt die Erfindung ein. Sie hat zum Ziel, der Bautechnik eine gegen den bakterieninduzierten Schwefelsäureangriff resistente Betonmischung bzw. Zementmörtelmischung zur Verfügung zu stellen, die sowohl zum Neubau als auch um Sanieren von Abwasser-Bauwerken geeignet ist, die preisgünstig hergestellt werden kann und die sich handwerksüblich verarbeiten läßt.

Dieses Ziel erreicht die Erfindung durch die Erfindung durch Verwendung einer Betonmischung oder Zementmörtelmischung aus unverschittenem Portlandzement mit hohem Sulfatwiderstand, Zuschlagstoffen aus einem Karbonatgestein (vorzugsweise Dolomitbrechsand und/oder Kalksteinbrechsand), Wasser und ggfs. weiteren Zusätzen wie einem Hydroxid (vorzugsweise Kalciumhydroxid und/oder Magneisumhydroxid) und/oder einem Mittel zur Abdichtung und Hydrophobierung der abgebundenen Betonoberfläche (vorzugsweise einer stabilisierten anionischen Bitumenemulsion) zur Herstellung von Abwasser-Bauwerken.

Die Erfindung beruht auf der Erkenntnis, daß die die Schwefelsäure produzierenden Bakterien als Lebensraum ein saures Medium benötigen und daß ein solches saures Medium von den bisher üblichen Beton-Zuschlagstoffen oder Mörtelsanden in einer für die Bakterien nahezu idealen Weise vorgegeben wird. Diese Stoffe sind nämlich überwiegend oder anteilig Kiese oder Sande mit Quarz und Silikaten als Hauptbestandteil. Sie besitzen damit eine Oberfläche, die von Natur aus im Laufe der Zeit durch Erosion von Kationen sauer geworden sein kann und die es zumindest den Bakterien gestattet, sich unbehindert ein saures Medium selbst zu schaffen. Dadurch offerieren sie sich geradezu als Zentren für die Ansiedlung der schädlichen Bakterien. Sobald sich diese Bakterien erst einmal angesiedelt haben, wird die Oberfläche der Zuschlagstoffe oder Mörtelsande durch die produzierte Schwefelsäure noch bakterienfreundlicher, so daß immer mehr Schwefelsäure produziert wird und schließlich die gefürchtete Korrosion in der umliegenden Zement-Matrix einsetzt.

Ausgehend von dieser Erkenntnis wird mit der Erfindung ein völlig neuartiger Weg zur Behebung des Problems eingeschlagen. Anstelle einer mehr mechanisch schützenden Versiegelung, Beschichtung oder Auskleidung der Bauwerks-Oberflächen erfolgt nämlich eine Bekämpfung der Ursache der Säure-Korrosion, indem im Baumaterial konsequent alle Bestandteile vermieden werden, welche sauer reagierende Oberflächen besitzen oder bilden können. Dadurch finden die schädlichen Bakterien von vornherein keinen Lebensraum mehr, auf dem sie gedeihen können, und dementsprechend verschwindet auch die Folgeerscheinung der Säure-Korrosion der Bauwerke, bzw. wird entscheidend vermindert.

Der in die erfindungsgemäß zu verwendende Betonmischung bzw. Zementmörtelmischung eingesetzte Portlandzement mit hohem Sulfatwiderstand ist ein handelsüblicher Spezial-Zement, der sich durch einen geringen Gehalt an der $C_3A$-Phase auszeichnet und der dem sogenannten "Sulfattreiben" entgegenwirken soll. Bei dem Sulfattreiben handelt es sich um eine Bildung von Verbindungen der $C_3A$-Phase mit Sulfaten und Wasser, die den Beton durch erhebliche Volumenvergrößerung auseinandertreiben, also um eine andere Erscheinung als die Säure-Korrosion, die in einer Zersetzung der Zement-Matrix durch die auf der Oberfläche der Zuschlagstoffe gebildete Schwefelsäure besteht. Dementsprechend kann ein solcher Portlandzement mit hohem Sulfatwiderstand für sich allein die Säure-Korrosion in Abwasser-Bauwerken auch nicht verhindern. Dieser Zement ist jedoch ein notwendiger Bestandteil der erfindungsgemäß zu verwendenden Mischung, und er darf auch nicht durch die in der Betontechnik üblichen Füller, wie Flugasche, Traß o. dgl. verschnitten werden.

Als zweiter notwendiger Bestandteil der erfindungsgemäß zu verwendenden Mischung sind ausschließlich Zuschlagstoffe aus einem Karbonatgestein vorgesehen. Solche Zuschlagstoffe sind für sich bekannt, beispielsweise zur Erzielung aesthetischer Wirkungen. So ist in der FR-A 1 291 011 ein Beton aus Weißzement (einem eisenfreien Zement) und Kalksteinbrechsand zur Herstellung von Kunststeinprodukten beschrieben. Bei der erfindungsgemäß zu verwendenden Mischung wird dem gegenüber die Tatsache nutzbar gemackt, daß karbonatische Zuschlagstoffe eine basisch wirkende Oberfläche besitzen, auf der sich die schädlichen Bakterien nicht oder - wenn sich organische Bewuchshäute auf der Bauwerks-Oberfläche gebildet haben - allenfalls gebremst betätigen können, und daß sie außerdem die vorteilhafte Eigenschaft aufweisen, Schwefelsäure zu neutralisieren. Somit sind die Karbonatgesteine in doppelter Hinsicht wirksam, indem sie einen Bakterienbesatz auf der Bauwerks-Oberfläche verhindern oder vermindern und indem sie, falls es noch in geringem Umfang zur Schwefelsäure-Bildung kommt, dieser eine Höchstmenge an reaktionsbereitem Gegenmittel gegenüberstellen, welches die Schwefelsäure abfängt, bevor sie zersetztend auf die Zement-Matrix einwirken kann. Die bevorzugten Karbonatgesteine sind Dolomitbrechsand oder Kalksteinbrechsand, die preisgünstig erhältlich und gut mit der Zement-Matrix verträglich sind.

Die Menge an Zuschlagstoffen und ihre Korngrößenverteilung kann in den für Beton bzw. Zementmörtel üblichen Bereichen liegen. Es hat sich jedoch als zweckmäßig erwiesen, die Mischung mit höheren Zementanteilen als üblich anzusetzen und (insbesondere bei einer Betonmischung) die Korngrößen der Zuschlagstoffe im Bereich kleinerer Werte zu halten, weil dadurch die bakterienabweisende Wirkung verbessert wird.

Als fakultativer Bestandteil können der erfindungsgemäß zu verwendenden Mischung noch geringe Mengen (z. B. bis zu 5 Gew.-%, bezogen auf die Zementmenge) an Hydroxiden, bevorzugt Calciumhydroxid und/oder Magnesiumhydroxid, der Beton- bzw. Zementmörtelmischung zugesetzt sein, um ihre bakterienabweisende Wirkung zu steigern. Die bevorzugten Hydroxide haben den Vorteil, daß sie in feinster Verteilung vorliegen und deshalb schon in verhältnismäßig geringer Konzentration wirksam sind. Das ist wichtig, weil in jedem Fall die erforderlichen Materialeigenschaften z. B. hinsichtlich Festigkeit, Abbindeverhalten u.dgl. gewährleistet bleiben müssen und man deshalb die Mischung nicht mit Zusätzen überladen darf, welche diese Eigenschaften beeinträchtigen können. Eine solche Beeinträchtigung könnte sich bei einer zu großen Zusatzmenge an Hydroxiden ergeben.

Als weiterer fakultativer Bestandteil, durch den sich die bakterienabweisende Wirkung der Betonmischung bzw. Zementmörtelmischung ebenfalls steigern läßt, kann dem Anmachwasser auch noch eine lösliche oder zumindest dispergierbare Substanz zugefügt werden, die den Beton bzw. Mörtel und insbesondere dessen Oberfläche wasserabweisend macht. Besonders vorteilhaft sind dabei solche Substanzen, die erst im Falle eines Säureangriffs aktiv werden und dann durch Vernetzen, Verharzen, Quellen o.dgl. eine lokale Abdichtung der Beton- bzw. Mörteloberfläche besorgen. Diese Abdichtung führt dazu, daß ein etwaiger Bakterienbesatz nicht mehr so fest an der Oberfläche haften bleibt, sondern sich durch fließendes Wasser abspülen läßt. Da in einem Abwasser-Bauwerk der Abwasserspiegel entsprechend dem jeweiligen Anfall sporadisch steigt und sinkt, entsteht somit eine mehr oder weniger periodische Selbstreinigung der Bauwerks-Oberflächen, die zusätzlich zur Korrosionsverminderung beiträgt.

Besonders kostengünstige und deshalb bevorzugte Substanzen, die erst im Bedarfsfall zu einer lokalen Abdichtung der gefährdeten Oberflächen führen, sind anionische Bitumenemulsionen, die im alkalischen pH-Bereich stabil sind, im sauren Bereich jedoch ausfallen und dann hydrophobierend wirken. Zementverträgliche, ausreichend stabile Emulsionen dieser Art sind im Handel erhältlich. Sie können mit Hilfe geeigneter Stabilisatoren, z. B. Celluloseethern und anderen Hydrokolloiden, noch höher stabilisiert und in Wasser fein verteilt der Beton- bzw. Zementmörtelmischung zugegeben werden, wobei die Zusatzmenge bis zu 15 Gew.-%, bezogen auf den Wassergehalt (Anmachwasser) der Mischung, betragen kann. Anstelle oder zusätzlich zu Bitumenemulsionen können aber auch noch andere abdichtende Substanzen eingesetzt werden, wie z. B. chemische Betonabdichtungsmittel, Leime und/oder Kunststoffdispersionen.

Im übrigen können bei Bedarf der Betonmischung bzw. Zementmörtelmischung auch noch weitere übliche Zusatzmittel, beispielsweise Abbinderegler, Verflüssiger, Gelbildner o.dgl. zugesetzt werden. Die vorangehend beschriebenen notwendigen und fakultativen Bestandteile der Mischung sind so beschaffen, daß sie mit weiteren üblichen Zusatzmitteln verträglich sind und auch die Einhaltung der erforderlichen Eigenschaften des Betons bzw. Mörtels gewährleisten.

Die Herstellung der Betonmischung bzw. Zementmörtelmischung kann auf konventionelle Weise geschehen. Bevorzugt erfolgt die Herstellung jedoch derart, daß zunächst in ein Zement-Wasser-Gemisch eine hohe Rühr-Energie eingeleitet wird, durch die jedes Zementkorn zerlegt und allseitig benetzt wird, bis schließlich ein kolloidiertes Zementleimprodukt entstanden ist. Etwaige Zusatzmittel werden dabei aus den schon genannten Gründen einer möglichst feinen Verteilung mitkolloidiert, sofern sie nicht wasserlöslich sind. Die Zuschlagstoffe werden anschließend in einem zweiten Mischvorgang zugemischt, und zwar in der gleichen Anlage oder in einem nachgeschalteten, für die Beton- bzw. Mörtelherstellung üblichen Hochleistungs-Zwangsmischer.

Dieses bevorzugte Herstellungsverfahren ergibt eine Betonmischung bzw. Zementmörtelmischung, die sich hervorragend im Spritzverfahren auftragen läßt, insbesondere bei den bevorzugten kleineren Korngrößen der Zuschlagstoffe. Dadurch eröffnet sich ein besonders vorteilhafter Weg zum Sanieren von Altbauten, indem deren Oberflächen im Spritzverfahren mit der Mischung überzogen werden. Wenn der Auftrag dabei in mehreren Schichten erfolgt, ist es zweckmäßig, ein Mittel zur Abdichtung und Hydrophobierung der abgebundenen Oberfläche nur in der äußeren Schicht und nicht auch in den darunterliegenden Schichten anzuwenden. In jedem Fall ist ein Spritzverfahren wesentlich kostengünstiger als die bisher praktizierte Methode des Beschichtens bzw. Auskleidens mit säurebeständigen Kunststoffen und außerdem ist es auch wesentlich wirksamer, da etwaige Spannungsrisse o.dgl. wegen der bakterienabweisenden Wirkung nicht zu einer Hinterwanderung von Bakterien führen können. Natürlich läßt sich die erfindungsgemäß zu verwendenden Betonmischung bzw. Zementmörtelmischung, sei sie konventionell oder nach dem bevorzugten Verfahren hergestellt, aber auch auf jede andere Weise entweder zu Betonfertigteilen oder in situ zu Ortbeton bzw. Mörtel weiterverarbeiten.

Zahlreiche Untersuchungen und Messungen haben die hervorragende Wirksamkeit der erfindungsgemäße zu verwendenden Betonmischung bzw. Zementmörtelmischung bestätigt. Die sei im nachfolgenden anhand von Ausführungsbeispielen näher erläutert:

Es wurden drei unterschiedliche Betonmischungen hergestellt, nämlich

**Beispiel A:**

eine erfindungsgemäß zu verwendende Mischung mit Zusatz einer höher stabilisierten anionischen Bitumenemulsion aus

 1000 g Portlandzement mit hohem Sulfatwiderstand
  380 g Wasser
   32 g handelsüblich stabilisierte Bitumenemulsion
   6 g Methylhydroxyethylcellulose
 1600 g Dolomitbrechsand mit der Korngröße
      0 - 3 mm und
  400 g Dolomitbrechsand mit der Korngröße
      3 - 8 mm,

**Beispiel B:**

eine erfindungsgemäß zu verwendende Mischung ohne Zusatz einer Bitumenemulsion aus

 1000 g Portlandzement mit hohem Sulfatwiderstand
  380 g Wasser
 1600 g Dolomitbrechsand mit der Korngröße
      0 - 3 mm und
  400 g Dolomitbrechsand mit der Korngröße
      3 - 8 mm, und

**Beispiel C:**

eine Mischung zu Vergleichszwecken aus

 1000 g Portlandzement mit hohem Sulfatwiderstand
  380 g Wasser
 1600 g Quarzsand mit der Korngröße
      0,3 mm und
  400 g Quarzsand mit der Korngröße
      3 - 8 mm.

Zur Herstellung der Betonmischungen wurde jeweils nach dem bevorzugten Verfahren vorgegangen, d. h. es wurde der Zement mit dem Wasser (und im Falle des Beispiels A den weiteren Zusätzen) zunächst in einem Intensiv-Rührwerk ca. 5 min lang gerührt, bis ein kolloidiertes Zementleimprodukt entstanden war. Danach wurde dann der Sand zugemischt Die so erhaltenen Mischungen wurden anschließend zu Prüfkörpern verarbeitet.

Eine Gruppe dieser Prüfkörper wurde mit Thiobazillen bzw. Thiooxybazillen geimpft, über eine vorbestimmte Zeit in einem die Bedingungen in einem Abwasserkanal simulierenden Schadgasschrank gelagert und dann untersucht. Dabei zeigte sich, daß sich auf den Prüfkörpern gemäß Beispiel C ein dichter Bakterienbesatz gebildet hatte, daß sich auf den Prüfkörpern gemäß Beispiel B die Bakterien nicht nennenswert vermehrt hatten und daß die Bakteriendichte auf den Prüfkörpern gemäß Beispiel A noch geringer war. Außerdem ließen sich bei den letztgenannten Prüfkörpern die Bakterien verhältnismäßig leicht mit fließendem Wasser wegschwemmen.

Eine weitere Gruppe der Prüfkörper wurde durch direkten Auftrag von Schwefelsäure zur Korrosion gebracht. Für die Prüfkörper gemäß Beispielen A und B wurde dabei zum Teil mehr als die siebenfache Menge an Schwefelsäure benötigt, um den gleichen Korrosionseffekt zu erhalten wie bei den Prüfkörpern gemäß Beispiel C. Dies belegt die deutlich verbesserte Resistenz, die mit der Erfindung erreicht wird. Da diese verbesserte Resistenz mit einem drastisch verminderten Bakterienbesatz einhergeht, ergibt sich in der Praxis eine Verminderung der tatsächlichen Korrosion um Größenordnungen.

## Patentansprüche

1. Verwendung einer Betonmischung oder Zementmörtelmischung aus unverschnittenem Portlandzement mit hohem Sulfatwiderstand, Zuschlagstoffen aus einem Karbonatgestein (vorzugsweise Dolomitbrechsand und/oder Kalksteinbrechsand), Wasser und ggfs. weiteren Zusätzen wie einem Hydroxid (vorzugsweise Calciumhydroxid und/oder Magnesiumhydroxid) und/oder einem Mittel zur Abdichtung und Hydrophobierung der abgebundenen Betonoberfläche (vorzugsweise einer stabilisierten anionischen Bitumenemulsion) zur Herstellung von Abwasser-Bauwerken.

2. Verfahren zur Herstellung der nach Anspruch 1 zu verwendenden Betonmischung oder Zementmörtelmischung dadurch, daß ein Zement-Wasser-Gemisch, ggfs. mit den Zusätzen versehen, intensiv vermischt wird, bis ein kolloidierter Zementleim entstanden ist, welcher anschließend mit den Zuschlagstoffen vermischt wird.

3. Verwendung einer nach Anspruch 2 hergestellten Betonmischung oder Zementmörtelmischung zur Sanierung von Abwasser-Bauwerken durch Spritzauftrag einer Beschichtung.

## Claims

1. Use of a concrete mixture or cement mortar mixture of unadulterated portland cement with high sulphate resistance, aggregates of a carbonate rock (preferably dolomite crushed sand and/or limestone crushed sand), water and optionally further additives such as a hydroxide (preferably calcium hydroxide and/or magnesium hydroxide) and/or an agent for sealing and making hydrophobic the set concrete surface (preferably a stabilized anionic bituminous emulsion) for the construction of sewage works.

2. Process for the preparation of the concrete mixture or cement mortar mixture to be used according to claim 1, characterised in that a cement-water mixture, optionally including additives, is mixed intensively until a colloided cement paste bas developed, which paste is subsequently mixed with the aggregates.

3. Use of a concrete mixture or cement mortar mixture prepared according to claim 2 for sanitizing sewage works through spray application of a coating.

## Revendications

1. Utilisation d'une composition de béton ou de mortier de ciment à base de ciment de Portland non dilué et à grande résistance aux sulfates, de granulats de roches de carbonate (de préférence du sable concassé de dolomie et/ou de roches calcaires), d'eau et éventuellement d'autres additifs tels qu'un hydroxyde (de préférence de l'hydroxyde de calcium et/ou de magnésium) et/ou un moyen d'étancher et d'imperméabiliser la surface externe du béton pris (de préférence une émulsion de bitume anionique stabilisée) pour la construction d'égouts.

2. Procédé de fabrication des compositions de béton ou de mortier de ciment à utiliser suivant la revendication 1 dans lequel on mélange d'une manière intensive une composition de ciment et d'eau, éventuellement avec les additifs, jusqu'a ce que se forme une pâte de ciment colloïdale que l'on mélange enfin avec les granulats.

3. Utilisation d'une composition de béton ou de mortier de ciment fabriquée suivant la revendication 2 pour assainir des égouts par application d'une couche par pulvérisation.